# EUROPEAN PATENT SPECIFICATION

(11) **EP 4 001 341 B1**
(45) Date of publication and mention of the grant of the patent: **27.03.2024**
(21) Application number: 20839844.6
(22) Date of filing: 14.07.2020
(51) Int. Cl.: C08G 59/68, C08G 59/24, C08G 59/32, C08J 5/24

(54) **CURABLE COMPOSITION, AND FIBER-REINFORCED COMPOSITE MATERIAL**
HÄRTBARE ZUSAMMENSETZUNG UND FASERVERSTÄRKTER VERBUNDSTOFF
COMPOSITION DURCISSABLE ET MATÉRIAU COMPOSITE RENFORCÉ DE FIBRES

(30) Priority: 17.07.2019 JP 2019131986
(43) Date of publication of application: 25.05.2022
(73) Proprietor: Daicel Corporation, Osaka 530-0011 (JP)
(72) Inventor: OSAKA, Takuya, Tokyo 108-8230 (JP); SUZUKI, Hirose, Tokyo 108-8230 (JP)
(74) Representative: Grünecker Patent- und Rechtsanwälte PartG mbB
(86) International application number: PCT/JP2020/027372
(87) International publication number: WO 2021/010394

(56) References cited:
- JP-A- H05 125 150
- JP-A- 2008 544 067
- JP-A- 2012 219 155
- JP-A- 2013 023 554
- JP-A- 2015 061 929
- JP-A- 2016 108 499
- JP-A- 2018 053 133
- JP-A- 2018 526 466
- US-A1- 2016 083 544

## Description

### Technical Field

The present disclosure relates to a novel curable composition, and to a composite material containing a cured product of the curable composition and reinforcing fibers.

JP2013/023554A relates to compositions for fiber-reinforced composites.

### Background Art

Fiber-reinforced composite materials are obtained by impregnating reinforcing fibers with a resin and then curing the resin, and are characterized by exhibiting high strength while being lightweight. Such a fiber-reinforced composite material also does not rust or corrode like metal. As a result, fiber-reinforced composite materials are used in place of metals as materials for houses and buildings, structural materials for applications such as aircraft and automobiles, and materials for sports equipment and the like.

As the resin, use of, for example, an epoxy resin having a bis-aryl fluorene structure is known (Patent Document 1). However, because the glass transition temperature of the cured product of the resin thereof is from 140 to 240°C, the cured product is insufficient in terms of heat resistance for use as a structural material in applications such as aircraft or automobiles.

### Citation List

### Patent Document

Patent Document 1: JP 2012-219155 A

### Summary of Invention

### Technical Problem

Therefore, an object of the present disclosure is to provide a curable composition capable of forming a fiber-reinforced composite material having excellent heat resistance.

Another object of the present disclosure is to provide a prepreg capable of forming a fiber-reinforced composite material having excellent heat resistance.

Yet another object of the present disclosure is to provide a fiber-reinforced composite material having excellent heat resistance.

### Solution to Problem

As a result of diligent research to solve the above problems, the present inventors discovered that a curable composition containing, at a specific ratio, a compound (1) and a compound (2) described below and also a Lewis acid catalyst has a glass transition temperature of 250°C or higher, and can be used to form a cured product having very excellent heat resistance. The present disclosure was completed based on these findings.

The present disclosure provides a curable composition defined in claim 1.

The present disclosure also provides the curable composition described above, wherein the Lewis acid catalyst is a complex formed by a Lewis acid represented by Formula (3) and a base:

MXₙ (3)

where in Formula (3), M represents a metal atom selected from B, Al, Fe, Sn, Si, Zn, and Ti, and X represents a halogen atom. Furthermore, n indicates an oxidation number of the metal atom.

The present disclosure also provides the curable composition described above, wherein the Lewis acid catalyst is a complex formed by a Lewis acid represented by Formula (3) and an amine.

The present disclosure also provides the curable composition, wherein an E' glass transition temperature of a cured product obtained by curing the curable composition according to dynamic viscoelasticity measurements under the following Curing Conditions is 250°C or higher:
Curing Conditions: Heating at 140°C for 0.5 hours and then heating at 180°C for 2 hours

The present disclosure also provides the curable composition, further comprising an antioxidant, wherein a content of the antioxidant is from 0.05 to 5.0 parts by weight per a total of 100 parts by weight of the compound (1) and the compound (2).

The present disclosure also provides a cured product of the curable composition described above.

The present disclosure also provides a prepreg containing reinforcing fibers and the curable composition.

The present disclosure also provides a fiber-reinforced composite material containing reinforcing fibers and a cured product of the curable composition described above.

### Advantageous Effects of Invention

The curable composition of the present disclosure has the configuration described above, and therefore exhibits a low level of tackiness and excellent handling ease at ordinary temperature. Furthermore, the curable composition is melted by heating and exhibits a high level of fluidity. This allows reinforcing fibers to be easily impregnated with the curable composition. Furthermore, a cured product of the curable composition exhibits extremely high heat resistance because the compound (1) and the compound (2) form a high density three-dimensional crosslinked structure. Moreover, the cured product maintains a high level of heat resistance even when exposed to a high temperature environment.

Therefore, the curable composition can be suitably used as a material for forming a fiber-reinforced composite material that excels in heat resistance.

Additionally, a fiber-reinforced composite material obtained using the subject curable composition exhibits excellent heat resistance, and the high level of heat resistance is not impaired even after use of the fiber-reinforced composite material in a high temperature environment. Therefore, the fiber-reinforced composite material is suitably used as a structural material in applications such as aircraft or automobiles.

### Description of Embodiments

### Curable composition

The curable composition according to an embodiment of the present disclosure contains at least a compound (1), a compound (2), and a Lewis acid catalyst.

### Compound (1)

The compound 1 is represented by Formula (1) below: 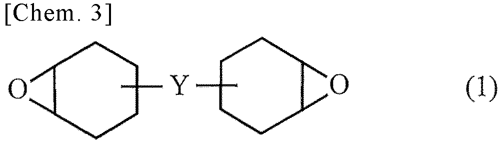 where in Formula (1), Y represents a single bond or a linking group.

In Formula (1) above, Y represents a single bond or a linking group, namely a divalent group having one or more atoms. Examples of the linking group include divalent hydrocarbon groups, alkenylene groups in which some or all of the carbon-carbon double bonds are epoxidized, carbonyl groups, ether bonds, ester bonds, carbonate groups, amide groups, and groups in which a plurality thereof are linked.

Examples of the divalent hydrocarbon group include linear or branched alkylene groups having from 1 to 18 carbons and divalent alicyclic hydrocarbon groups having from 3 to 18 carbons. Examples of the linear or branched alkylene group having from 1 to 18 carbons include a methylene group, a methyl methylene group, a dimethyl methylene group, an ethylene group, a propylene group, and a trimethylene group. Examples of the divalent alicyclic hydrocarbon group having from 3 to 18 carbons include cycloalkylene groups (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the epoxidized alkenylene group in which one, some, or all of the carbon-carbon double bond(s) are epoxidized, which may be referred to as an "epoxidized alkenylene group", include a linear or branched alkenylene group having from 2 to 8 carbons, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an epoxidized alkenylene group in which all of the carbon-carbon double bonds are epoxidized and more preferably an epoxidized alkenylene group having from 2 to 4 carbons in which all of the carbon-carbon double bonds are epoxidized.

Representative examples of the alicyclic epoxy compound represented by Formula (1) above include (3,4,3',4'-diepoxy)bicyclohexyl, bis(3,4-epoxycyclohexylmethyl) ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-1-yl)ethane, and compounds represented by Formulas (1-1) to (1-8) below. Note that L in Formula (1-5) below is an alkylene group having from 1 to 8 carbons, and among these alkylene groups, L is preferably a linear or branched alkylene group having from 1 to 3 carbons, such as a methylene group, an ethylene group, a propylene group, or an isopropylene group. Moreover, n¹ and n² in Formulas (1-5) and (1-7) below each represent an integer from 1 to 30.

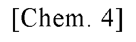

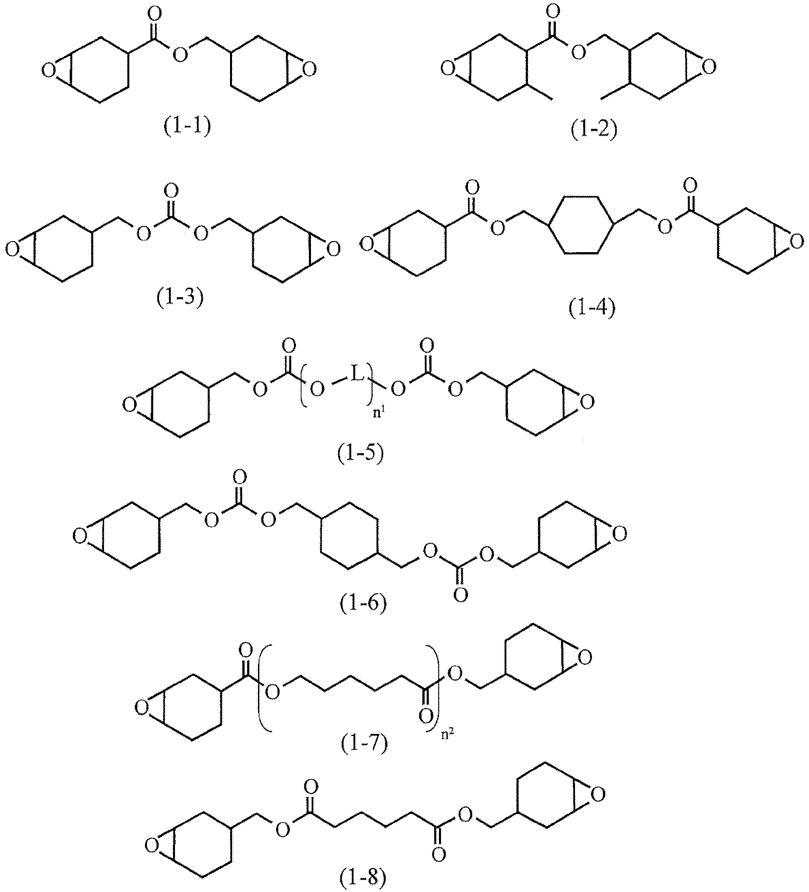

Of these, from the perspective of being able to form a cured product excelling in heat resistance, the compound (1) is preferably a compound in which Y in Formula (1) contains an ester bond, and is particularly preferably compounds represented by Formula (1-1) to (1-8) above.

From the perspective of being able to obtain a cured product excelling in heat resistance, the content of the compound (1) (i.e., if two or more are included, then the total content thereof) is, for example, from 5 to 35 wt.%, preferably from 10 to 30 wt.%, particularly preferably from 10 to 25 wt.%, even more preferably from 15 to 25 wt.%, and most preferably from 15 to 20 wt.%, of the total amount of cationically curable compounds contained in the curable composition.

The content of the compound (1) (i.e., if two or more are included, then the total content thereof) is, for example, from 5 to 35 wt.%, preferably from 10 to 30 wt.%, particularly preferably from 10 to 25 wt.%, even more preferably from 15 to 25 wt.%, and most preferably from 15 to 20 wt.% relative to the total content (100 wt.%) of the compound (1) and the compound (2).

The content of the compound (1) (i.e., if two or more are included, then the total content thereof) is, for example, from 10 to 35 wt.%, preferably from 10 to 25 wt.%, particularly preferably from 10 to 20 wt.%, and most preferably from 15 to 20 wt.% of the total amount of the curable composition.

### Compound 2

The compound represented by Formula (2) includes compounds represented by Formulas (2b), (2c) and (2d) below.

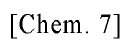

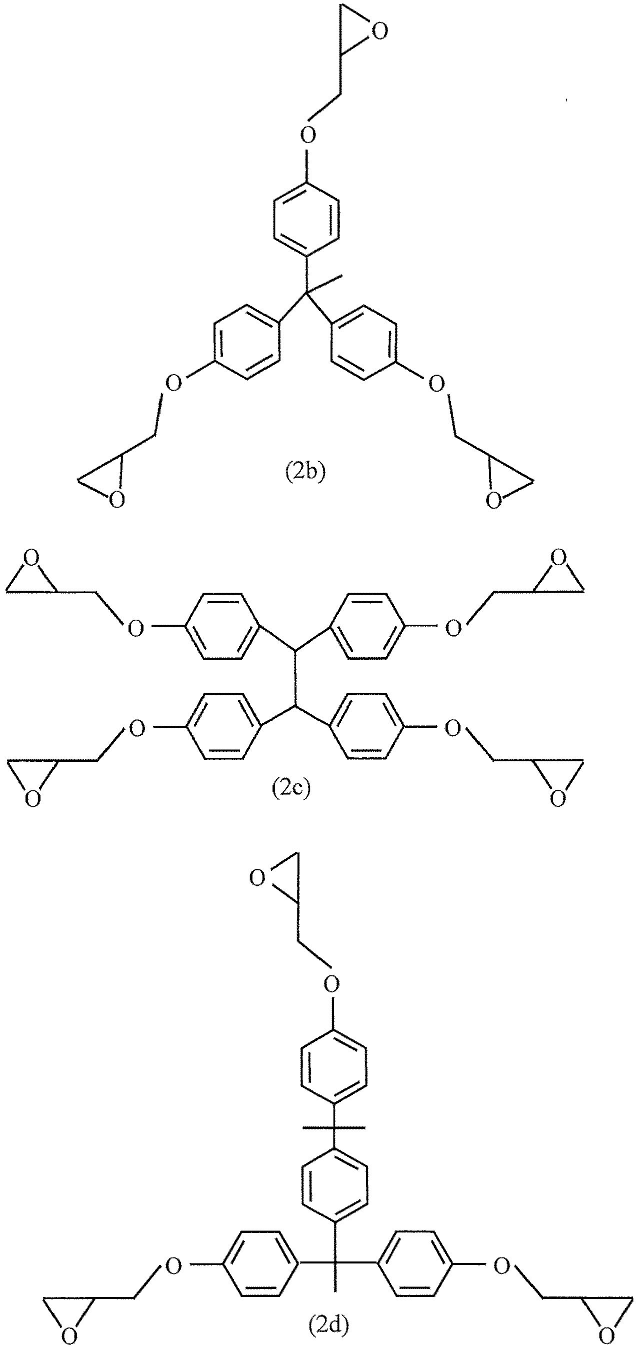

From the perspective of reducing the minimum melt viscosity of the curable composition and being able to impart excellent coating properties and ease of impregnation into fibers or the like, or from the perspective of obtaining a cured product excelling in heat resistance, the content of the compound (2) (if two or more are included, then the total content thereof) is, for example, from 65 to 95 wt.%, preferably from 70 to 90 wt.%, particularly preferably from 75 to 90 wt.%, even more preferably from 80 to 90 wt.%, and most preferably from 80 to 85 wt.%, of the total amount of cationically curable compounds contained in the curable composition.

The compound (2) contains at least one type selected from compounds represented by Formulas (2a) to (2b), (2c) and (2d) above, and from the perspective of obtaining a cured product excelling in heat resistance, the compound (2) most preferably contains at least a compound represented by Formula (2a) or a compound represented by Formula (2b). In addition, in relation to the total amount of the compound (2), the total content of the compound represented by Formula (2a) and the compound represented by Formula (2b) is, for example, preferably 60 wt.% or greater, more preferably 70 wt.% or greater, even more preferably 75 wt.% or greater, particularly preferably 80 wt.% or greater, even more particularly preferably 90 wt.% or greater, and most preferably 95 wt.% or greater.

In addition, of the total content of the compound (1) and the compound (2), the proportion of the content of the compound (2) is, for example, from 65 to 95 wt.%, preferably from 70 to 90 wt.%, particularly preferably from 75 to 90 wt.%, most preferably from 80 to 90 wt.%, and especially preferably from 80 to 85 wt.%.

The content of the compound (2) (i.e., if two or more are included, then the total content thereof) is, for example, from 60 to 85 wt.%, preferably from 65 to 85 wt.%, particularly preferably from 70 to 85 wt.%, and most preferably from 75 to 83 wt.% of the total amount of the curable composition.

A weight ratio of the content of the compound (1) to the content of the compound (2), that is, a weight ratio of [the compound (1)/the compound (2)], is from 10/90 to 40/60, preferably from 10/90 to 30/70, particularly preferably from 10/90 to 25/75, more particularly preferably from 10/90 to 20/80, and most preferably from 15/85 to 20/80.

In addition, in terms of improving the heat resistance of the obtained cured product, the total content of the compound (1) and the compound (2) is, for example, preferably 60 wt.% or greater, more preferably 70 wt.% or greater, particularly preferably 80 wt.% or greater, more particularly preferably 90 wt.% or greater, and most preferably 95 wt.% or greater, of the total amount of cationically curable compounds included in the curable composition.

Moreover, the total content of the compound (1) and the compound (2) is, for example, preferably 60 wt.% or greater, more preferably 70 wt.% or greater, particularly preferably 80 wt.% or greater, more particularly preferably 90 wt.% or greater, and most preferably 95 wt.% or greater, of the total amount of curable compounds included in the curable composition.

### Lewis acid catalyst

The Lewis acid catalyst contains at least a Lewis acid represented by Formula (3) below:

MXₙ (3)

where in Formula (3), M represents a metal atom selected from B, Al, Fe, Sn, Si, Zn, and Ti, and X represents a halogen atom. Furthermore, n indicates the oxidation number of the metal atom.

Among these, from the perspective of particularly excelling in a cationic polymerization promoting effect of an epoxy compound, the Lewis acid is preferably a Lewis acid in which M in Formula (3) is boron (B). Accordingly, a boron trihalide is preferable. Examples of the boron trihalide include BF₃, BCl₃, and BBr₃.

As the Lewis acid catalyst, the Lewis acid may be used as is, or catalyst obtained by forming a complex between the Lewis acid and a base may be used.

Among these, from the perspective of excelling particularly in the cationic polymerization promoting effect of the epoxy compound, a complex of a Lewis acid and a base is preferably used as the Lewis acid catalyst, and a complex of a boron trihalide and a base is particularly preferably used as the Lewis acid catalyst.

Examples of the base include ammonia; esters such as ethyl acetate; ethers such as 1,4-dioxane and tetrahydrofuran; and amines. Among these, amines are preferable from the perspective of being able to form a complex that is particularly excellent in the cationic polymerization promoting effect of the epoxy compound.

Examples of the amine include aliphatic amines (e.g., methylamine, ethylamine, isopropylamine, ethylenediamine, tetramethylenediamine, and hexamethylenediamine, etc.), cycloaliphatic amines (e.g., cyclohexylamine, dicyclohexylamine, and 1,3-bis(aminomethyl)cyclohexane, etc.); aromatic amines (e.g., aniline, toluidine, benzylamine, dibenzylamine, and diphenylamine, etc.); and heterocyclic amines (e.g., piperidine, bis(aminopropyl)piperazine, and aminoethyl piperazine, etc.).

The complex of a Lewis acid and a base is preferably a boron trihalide-amine complex, and is particularly preferably at least one type selected from a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, and a boron trichloride-dimethyloctylamine complex.

The complex of a Lewis acid and a base is particularly preferably a boron trihalide-aliphatic amine complex, and is more particularly preferably at least one type selected from a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, and a boron trifluoride-dibutylamine complex.

The usage amount of the Lewis acid catalyst (in particular, the complex of a boron trihalide and a base) is, for example, from 1 to 10 parts by weight, preferably from 1 to 5 parts by weight, and particularly preferably from 2 to 4 parts by weight per a total of 100 parts by weight of the compound (1) and the compound (2).

### Other Components

The curable composition according to an embodiment of the present disclosure may contain another component, as necessary, in addition to the components described above.

In addition to the compound (1) and the compound (2) described above, the curable composition may also contain one or more of other cationically curable compounds, but from the perspective of obtaining a cured product that excels in heat resistance, the content of the other cationically curable compounds is, for example, preferably 40 wt.% or less, more preferably 30 wt.% or less, particularly preferably 20 wt.% or less, even more particularly preferably 10 wt.% or less, and especially preferably 5 wt.% or less, of the total amount of cationically curable compounds contained in the curable composition.

The curable composition contains the compound (1) and the compound (2) as curable compounds, but may also contain one or more of other curable compounds (e.g., a radically curable compound, etc.) in addition thereto. From the perspective of obtaining a cured product excelling in heat resistance, the content of the other curable compound (total amount when two or more are contained) is, for example, preferably 40 wt.% or less, more preferably 30 wt.% or less, particularly preferably 20 wt.% or less, even more particularly preferably 10 wt.% or less, and most preferably 5 wt.% or less, of the total amount of curable compounds contained in the curable composition.

The curable composition may further contain an antioxidant. When the curable composition contains an antioxidant, heat resistance improves, and yellowing or cloudiness of the obtained cured product tends to be suppressed. Therefore, for example, when a fiber-reinforced composite material is produced using the curable composition, the reinforcing fibers contained in the fiber-reinforced composite material appear to be transparent, and therefore containing an antioxidant is preferable from the perspective of obtaining an aesthetically pleasing appearance and a high level of design performance.

Examples of the antioxidant include phenol-based antioxidants, phosphorus-based antioxidants, and sulfur-based antioxidants. One of these can be used alone, or two or more can be used in combination. Among these, use of a phenol-based antioxidant as the antioxidant is preferable from the perspective of particularly excelling in the effect of suppressing yellowing and cloudiness.

Examples of the phenol-based antioxidant include monophenols such as 2,6-di-t-butyl-p-cresol, butylated hydroxyanisole, 2,6-di-t-butyl-p-ethylphenol, and stearyl-β-(3,5-di-t-butyl-4-hydroxyphenyl) propionate; bis-phenols such as 2,2'-methylene-bis(4-methyl-6-t-butylphenol), 2,2'-methylene-bis(4-ethyl-6-t-butylphenol), 4,4'-thio-bis(3-methyl-6-t-butylphenol), 4,4'-butylidene bis(3-methyl-6-t-butylphenol), and 3,9-bis[1,1-dimethyl-2-{β-(3-t-butyl-4-hydroxy-5-methylphenyl)propionyloxy}ethyl] 2,4,8,10-tetraoxaspiro [5.5]undecane; and polymeric phenols such as 1,1,3-tris (2-methyl-4-hydroxy-5-t-butylphenyl) butane, 1,3,5-trimethyl-2,4,6-tris (3,5-di-t-butyl-4-hydroxybenzyl) benzene, tetrakis [methylene-3-(3',5'-di-t-butyl-4'-hydroxyphenyl)propionate] methane, bis [3,3'-bis-(4'-hydroxy-3'-t-butylphenyl)butyric acid] glycol ester, 1,3,5-tris (3',5'-di-t-butyl-4'-hydroxybenzyl)-s-triazine-2,4,6-(1H,3H,SH) trione, and tocophenol.

The content of the antioxidant (of these, the phenol-based antioxidant) is, for example, from 0.05 to 5.0 parts by weight, preferably from 0.05 to 1.0 parts by weight, and particularly preferably from 0.1 to 0.5 parts by weight, relative to a total of 100 parts by weight of the compound (1) and the compound (2). When the content of the antioxidant is less than the aforementioned range, the effect of improving heat resistance is difficult to achieve, and the suppression of deterioration due to oxidation or the like may be insufficient. On the other hand, when the content of the antioxidant exceeds the aforementioned range, physical properties such as heat resistance of the cured product may decrease, which may be disadvantageous in terms of cost. Note that when two or more antioxidants are used in combination, the total amount of the antioxidants is preferably controlled to the range described above.

The curable composition may also contain one or more filler(s). When the curable composition contains a filler, an effect of further improving the heat resistance of the obtained cured product tends to be obtained.

The filler includes organic fillers and inorganic fillers.

Examples of the inorganic filler include oxides such as alumina, silica, zinc oxide, magnesium oxide, antimony oxide, and titania; hydroxides such as aluminum hydroxide and magnesium hydroxide; carbonates such as calcium carbonate, magnesium carbonate, and hydrotalcite; silicates such as calcium silicate, carbon black, talc, clay, mica, montmorillonite, and glass beads; and sulfates such as barium sulfate.

Examples of the organic filler include butadiene-based rubber particles [for example, rubber particles configured by a copolymer containing, as monomer components, a (meth)acrylic acid ester and an aromatic vinyl (in particular, butyl acrylate and styrene)], acrylic-based rubber particles, silicone/acrylic composite rubber particles, cellulose particles, and plastic particles (e.g., particles formed from a plastic such as polyimide, polyether ether ketone, and aramid) and the like.

Among these, the filler is preferably an inorganic filler (in particular, silica) from the perspective of excelling in the effect of improving the heat resistance of the obtained cured product.

The average particle size of the filler is, for example, from 0.1 to 100 µm. Note that in the present specification, the average particle size of the filler is the median diameter (d50) obtained by a laser diffraction/scattering method.

The compounded amount of the filler (among the fillers, an inorganic filler, and particularly silica) is, for example, from 1 to 20 parts by weight, and preferably from 3 to 15 parts by weight, per a total of 100 parts by weight of the compound (1) and the compound (2).

The curable composition may further contain one or more of other components within a range that does not impair the effect. Examples of other components include defoaming agents, leveling agents, coupling agents (e.g., silane coupling agents, etc.), surfactants, flame retardants, ultraviolet absorbers, ionic adsorbents, phosphors, mold release agents, pigment dispersants, and dispersing aids.

The curable composition can be produced by uniformly mixing the components described above using a commonly known mixing device, such as a self-revolving-type agitating and defoaming apparatus, a homogenizer, a planetary mixer, a three-roll mill, or a bead mill. Each component may be mixed simultaneously or sequentially.

The viscosity of the curable composition at a shear rate of 20 (1/s) in an ordinary temperature atmosphere (e.g., from 15 to 25°C) is, for example, 5000 mPa s or greater, preferably 10⁴ mPa·s or greater, more preferably 10⁶ mPa·s or greater, particularly preferably 10⁴ Pa·s or greater, and more particularly preferably 10⁶ Pa·s or greater. Therefore, the curable composition exhibits a low level of tackiness and excellent handling ease. Note that the viscosity can be measured using a rheometer (trade name "Physica MCR301", available from Anton Paar GmbH).

The curable composition has a minimum melt viscosity in a range of, for example, 100 to 150°C (preferably in a range of 100 to 130°C). From the perspective of coatability and ease of impregnating in fibers or the like, the minimum melt viscosity is, for example, preferably from 300 to 5000 mPa·s, more preferably from 500 to 3500 mPa·s, particularly preferably from 500 to 2500 mPa·s, and most preferably from 500 to 1500 mPa·s. In the abovementioned temperature range, the curable composition melts due to the increase in temperature, and the viscosity is reduced. Furthermore, the curing reaction proceeds around a certain temperature, and the viscosity begins to increase as the temperature rises. The viscosity at the boundary temperature at which curable composition shifts from melting to curing is referred to as the minimum melt viscosity. Note that the viscosity can be measured by the method described in the Examples.

### Cured product

The cured product according to an embodiment of the present disclosure is a cured product of the curable composition described above. The cured product can be produced by subjecting the curable composition to a heating treatment.

The temperature of the heating treatment of the curable composition is, for example, from 80 to 250°C, and the heating treatment time is, for example, approximately from 0.5 to 24 hours. The heating temperature may be held constant in the aforementioned range or may be varied stepwise.

The cured product excels in heat resistance, and the glass transition temperature of E' according to dynamic viscoelasticity measurements of the cured product (e.g., a cured product obtained by subjecting the curable composition to a heating treatment under the following conditions) is, for example, 250°C or higher, preferably 260°C or higher, more preferably 270°C or higher, particularly preferably 280°C or higher, and most preferably 285°C or higher. Note that the upper limit of the glass transition temperature is, for example, approximately 320°C.

Heat treatment conditions: Heating at 140°C for 0.5 hours and then heating at 180°C for 2 hours

Furthermore, the glass transition temperature of the cured product of the curable composition (e.g., a cured product obtained by subjecting the curable composition to a heating treatment under the conditions described above), determined from a tanδ peak top temperature through dynamic viscoelasticity measurements, is, for example, 280°C or higher, preferably 290°C or higher, even more preferably 295°C or higher, and particularly preferably 300°C or higher. Note that the upper limit of the glass transition temperature is, for example, approximately 330°C.

### Prepreg

A prepreg according to an embodiment of the present disclosure contains reinforcing fibers and the curable composition described above. The prepreg may contain other components in addition to the reinforcing fibers and the curable composition.

The prepreg can be produced, for example, by impregnating reinforcing fibers with a solvent diluted-product of the curable composition, and then volatilizing the solvent by drying or the like, and if necessary, implementing a heating treatment to cure a portion of the curable composition (that is, semi-curing the curable composition).

Examples of the solvent include aliphatic hydrocarbons such as hexane, heptane, and octane; alicyclic hydrocarbons such as cyclohexane; aromatic hydrocarbons such as benzene, toluene, xylene, and ethylbenzene; halogenated hydrocarbons such as chloroform, dichloromethane, and 1,2-dichloroethane; ethers such as diethyl ether, dimethoxyethane, tetrahydrofuran, and dioxane; ketones such as acetone, methyl ethyl ketone, and methyl isobutyl ketone; esters such as methyl acetate, ethyl acetate, isopropyl acetate, and butyl acetate; amides such as N,N-dimethylformamide and N,N-dimethylacetamide; nitriles such as acetonitrile, propionitrile, and benzonitrile; alcohols such as methanol, ethanol, isopropyl alcohol, and butanol; and sulfoxides such as dimethylsulfoxide. One of these can be used alone, or two or more can be used in combination.

Examples of the reinforcing fibers include carbon fibers, glass fibers, aramid fibers, boron fibers, graphite fibers, silicon carbide fibers, high strength polyethylene fibers, tungsten carbide fibers, and poly(p-phenylene benzoxazole) fibers (PBO fibers). Furthermore, examples of the carbon fibers include polyacrylonitrile (PAN)-based carbon fibers, pitch-based carbon fibers, and vapor-grown carbon fibers. A single type of these reinforcing fibers can be used alone, or two or more thereof can be combined and used. From the perspective of excelling in heat resistance, among these reinforcing fibers, carbon fibers, glass fibers, and aramid fibers are preferable, and carbon fibers are particularly preferable.

The form of the reinforcing fibers in the prepreg is not particularly limited, and for example, the reinforcing fibers may be in the form of filaments (long fibers), in the form of tows, in the form of a unidirectional material in which tows are arranged in one direction, in the form of a woven fabric, and in the form of a nonwoven fabric. Furthermore, examples of the woven fabric include a stitched sheet in which a sheet is stitched and thus does not come apart, the sheet thereof being a sheet obtained by knitting together, in one direction, fiber bundles, as typified by a plain weave, a twill weave, a satin weave or a non-crimped fabric, or a sheet in which the fibers bundles are laminated at different angles.

The content of the reinforcing fibers is, for example, from 50 to 90 wt.%, preferably from 60 to 85 wt.%, and particularly preferably from 65 to 80 wt.% of the total amount of the prepreg.

Furthermore, the content of the curable composition is, for example, from 10 to 50 wt.%, preferably from 15 to 40 wt.%, and particularly preferably from 20 to 35 wt.% of the total amount of the prepreg.

The ratio of the content of the reinforcing fibers to the content of the curable composition (reinforcing fibers/curable composition; weight ratio) in the prepreg is, for example, from 50/50 to 90/10, preferably from 60/40 to 85/15, and particularly preferably from 65/35 to 80/20.

If the prepreg contains reinforcing fibers and the curable composition within the aforementioned range, a fiber-reinforced composite material having both heat resistance and mechanical strength is obtained, and thus the contents of the reinforcing fibers and curable composition are preferably within the abovementioned range. When the content of the reinforcing fibers is below the abovementioned range the mechanical strength tends to decrease. Furthermore, if the content of the curable composition is less than the range described above, heat resistance tends to decrease.

At ordinary temperature (e.g., from 15 to 25°C), the tackiness of the prepreg is low, and even when the prepreg is touched with a finger, the curable composition does not adhere to the finger. Therefore, the prepreg exhibits handling easy and excellent workability.

### Fiber-reinforced composite material

The fiber-reinforced composite material according to an embodiment of the present disclosure contains reinforcing fibers and a cured product of the curable composition. The fiber-reinforced composite material may contain other components in addition to the reinforcing fibers and the cured product of the curable composition.

The fiber-reinforced composite material can be produced by, for example, subjecting the prepreg to a heating treatment to cure the curable composition. Note that the heating treatment conditions of the prepreg are the same as the conditions for producing the cured product by subjecting the curable composition to a heating treatment.

The content of reinforcing fibers in the fiber-reinforced composite material is, for example, from 50 to 90 wt.%, preferably from 60 to 85 wt.%, and particularly preferably from 65 to 80 wt.% of the total amount of the fiber-reinforced composite material.

In addition, the content of the cured product of the curable composition in the fiber-reinforced composite material is, for example, from 10 to 50 wt.%, preferably from 15 to 40 wt.%, and particularly preferably from 20 to 35 wt.% of the total amount of the fiber-reinforced composite material.

The ratio of the content of the reinforcing fibers to the content of the curable composition (reinforcing fibers/curable composition; weight ratio) in the fiber-reinforced composite material is, for example, from 50/50 to 90/10, preferably from 60/40 to 85/15, and particularly preferably from 65/35 to 80/20.

When the fiber-reinforced composite material contains reinforcing fibers and a cured product of the curable composition in the aforementioned range, the fiber-reinforced composite material is provided with both excellent heat resistance and high mechanical strength, and thus the ratio of the contents thereof is preferably within the abovementioned range. However, when the content of the reinforcing fibers is below the range described above, mechanical strength tends to decrease. On the other hand, when the content of the cured product of the curable composition is less than the range described above, heat resistance tends to decrease.

Each of the configurations, combinations thereof, and the like according to the present disclosure is an example, and various additions, omissions, substitutions, and changes may be made as appropriate without departing from the gist of the present disclosure. Further, the present disclosure is not limited by the embodiments and is limited only by the claims.

### Examples

Hereinafter, the present disclosure will be described more specifically with reference to examples, but the present disclosure is not limited by these examples.

### Example 1

Epalloy 9000 was heated and melted in an oven at 100°C for 2 hours. Amounts of 82 g of the molten Epalloy 9000, 18 g of Celloxide 2021P, and 0.05 g of Irganox 1010 were weighed in a 0.05 g ointment bottle, after which the contents were stirred for 6 minutes at 2750 rpm using a stirring device (trade name: Speedmixer, available from FlackTek Inc.), and 100.5 g of an epoxy composition (1) was obtained.

An amount of 3.0 g of ANCHOR 1115 was added to the obtained epoxy composition (1), the mixture was stirred for 3 minutes at 2750 rpm using the stirring device, and 103.5 g of a curable composition (1) was obtained.

### Examples 2 to 12 and Comparative Examples 1 and 2

Curable compositions were obtained in the same manner as in Example 1 with the exception that the formulations of the curable compositions were changed as described in the table below.

### Minimum melt viscosity

The minimum melt viscosity of the obtained curable composition was measured using a rotary rheometer (trade name: Kinexus Pro, available from Malvern Panalytical Ltd.) under the following measurement conditions.

### Measurement conditions

Temperature range: from 25°C to 150°C
Rate of temperature increase: 2°C/min
Deformation Mode: vibration
Frequency: 1 Hz
Strain: 1%

### Preparation of cured product

Two glass plates coated with a mold release agent were placed facing each other, and a silicone gasket was disposed between the two glass plates and used as a spacer defining an interval between the two glass plates.

The curable compositions obtained in the examples and comparative examples were degassed under vacuum conditions and poured into the gap between the two glass plates, and the periphery was fixed to prevent resin leakage. This was then used as a sample.

Next, the sample was heated at 140°C for 0.5 hours and then at 180°C for 2 hours, and a cured product was obtained.

The appearance, glass transition temperature, and heat resistance of the obtained cured product were evaluated using the following methods.

### Appearance

The color of the obtained cured product was visually confirmed.

### Glass transition temperature (Tg)

The glass transition temperature (Tg) of the cured product (thickness 2 mm × width 10 mm × length 4 cm) was determined by dynamic viscoelasticity measurements (DMA) under the following conditions.

### Measuring device and measurement conditions

Measuring device: Solid viscoelasticity measuring device, trade name: Artemis DMA 242, available from Netzsch Instruments LLC.
Atmosphere: Air
Temperature range: from 20°C to 400°C
Rate of temperature increase: 5°C/min
Deformation mode: cantilever bending test
Frequency: 1 Hz

### Heat resistance

The obtained cured product was subjected to a heat resistance test described in the tables below. The cured product after the heat resistance test was measured in the same manner as in the above "Appearance" and "Glass transition temperature" evaluations above.

The results are summarized and shown in the tables below.

### [Table 1]

**Table 1**

| | | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|
| Curable composition | Alicyclic epoxy compound | 2021P | 18 | 18 | 18 | 18 | 18 | 18 | 18 | 18 | - | 18 |
| | | YX-8000 | - | - | - | - | - | - | - | - | 18 | 82 |
| | Polyfunctional epoxy compound | Epalloy 9000 | 82 | 82 | 82 | 82 | 82 | 82 | 82 | 82 | 82 | - |
| | | EHPE3150 | - | - | - | - | - | - | - | - | - | - |
| | Lewis acid catalyst | ANCHOR 1115 | 3 | 3 | 3 | 3 | 3 | 3 | 3 | 3 | 3 | 3 |
| | Antioxidant | Irganox 1010 | 0.1 | 0.4 | - | - | - | - | - | - | - | 0.1 |
| | Filler | Rubber particles | - | - | 8 | 8 | - | - | - | - | - | - |
| | | Nylon particles | - | - | - | - | - | - | 8 | - | - | - |
| | | Cellulose particles | - | - | - | - | - | - | - | 8 | - | - |
| | | Silica particles | - | - | - | - | 12 | 12 | - | - | - | - |
| | | MCB | - | - | - | 0.4 | - | 0.4 | - | - | - | - |
| Minimum melt viscosity | | mPa·s | 500/123°C | 510/115°C | 500/105°C | 500/105°C | 2005/112°C | 2005/112°C | 530/105°C | 540/113°C | 890/123°C | 1688/25°C |
| Physical properties of cured product | Curing conditions | | 140°C/0.5 h | 140°C/0.5 h | 140°C/0.5 h | 140°C/0.5 h | 140°C/0.5 h | 140°C/0.5 h | 140°C/0.5 h | 140°C/0.5 h | 140°C/0.5 h | 90°C/2 h |
| | | | | | | | | | | | | 140°C/0.5 h |
| | | | 180°C/2 h | 180°C/2 h | 180°C/2 h | 180°C/2 h | 180°C/2 h | 180°C/2 h | 180°C/2 h | 180°C/2 h | 180°C/2 h | |
| | | | | | | | | | | | | 180°C/2 h |
| | Appearance | | Transparent light yellow | Transparent light yellow | Semi-transparent/ non-transparent cloudy/white | Semi-transparent/ non-transparent cloudy/white | Non-transparent/ white | Non-transparent/ white | Semi-transparent/ non-transparent cloudy/white | Semi-transparent/ non-transparent cloudy/white | Transparent light yellow | Transparent light yellow |
| | E' Tg | °C | 285 | 285 | 284 | 284 | 294 | 285 | 283 | 282 | 182 | 121 |
| | tan δ Tg | °C | 302 | 304 | 305 | 304 | 318 | 307 | 303 | 300 | 197 | 136 |
| Heat resistance test | Test conditions | | 230°C/25 h | 230°C/25 h | 240°C/190 h | 240°C/190 h | 250°C/2 h | 250°C/48 h | 240°C/190 h | 240°C/190 h | 230°C/25 h | - |
| | Appearance | | Dark brown | Dark brown | Dark brown | Dark brown | Dark brown | Dark brown | Dark brown | Dark brown | Dark brown | - |
| | E' Tg | °C | 285 | 284 | 275 | 275 | 291 | 290 | 272 | 271 | 175 | - |
| | tan δ Tg | °C | 295 | 297 | 289 | 291 | 302 | 303 | 283 | 280 | 193 | - |

### [Table 2]

**Table 2**

| | | | Example 9* | Example 10* | Example 11* | Example 12* |
|---|---|---|---|---|---|---|
| Curable composition | Alicyclic epoxy compound | 2021P | 25 | 25 | 25 | 21 |
| | | YX-8000 | - | - | - | - |
| | Polyfunctional epoxy compound | Epalloy 9000 | - | - | - | - |
| | | EHPE3150 | 75 | 75 | 75 | 64 |
| | Lewis acid catalyst | ANCHOR 1115 | 3 | 3 | 3 | 2.57 |
| | Antioxidant | Irganox 1010 | - | - | 0.3 | - |
| | Filler | Rubber particles | - | 11 | 11 | - |
| | | Nylon particles | - | - | - | - |
| | | Cellulose particles | | | | |
| | | Silica particles | - | - | - | 14 |
| | | MCB | - | - | - | - |
| Minimum melt viscosity | | mPa·s | 57/123°C | 4423/126°C | 4423/126°C | 2245/126°C |
| Physical properties of cured product | Curing conditions | | 180°C/2 h | 180°C/2 h | 140°C/0.5 h | 140°C/0.5 h |
| | | | | | 180°C/2 h | 180°C/2 h |
| | Appearance | | Very transparent light yellow | Very transparent light yellow | Very transparent light yellow | Semi-transparent, cloudy |
| | E' Tg | °C | 254 | 254 | 257 | 290 |
| | tan δ Tg | °C | 266 | 264 | 269 | 310 |
| Heat resistance test | Test conditions | | 200°C/12 h | 204°C/190 h | 204°C/190 h | 205°C/12 h |
| | Appearance | | Dark brown | Slightly yellowish and transparent | Slightly yellowish and transparent | Dark brown |
| | E' Tg | °C | 254 | 292 | 290 | 308 |
| | tan δ Tg | °C | 276 | 300 | 304 | 318 |

| | | | | | | |
|---|---|---|---|---|---|---|
| * Reference example | | | | | | |

### Cationically curable compound

2021P: 3,4-epoxycyclohexylmethyl(3,4-epoxy)cyclohexanecarboxylate, trade name "CELLOXIDE 2021P", available from Daicel Corporation
YX-8000: Hydrogenated bisphenol A-type epoxy resin, available from Japan Epoxy Resin Co., Ltd.
Epalloy 9000: Compound represented by Formula (2b), trade name "Epalloy 9000", available from CVC Thermoset Specialities
EHPE3150: Compound represented by Formula (2a), available from Daicel Corporation

### Lewis acid catalyst

ANCHOR 1115: Boron trifluoride·isopropyl amine complex, available from Air Products Japan, Inc.

### Antioxidant

Irganox 1010: pentaerythritol tetrakis[3-(3,5-di-t-butyl-4-hydroxyphenol)propionate], trade name "Irganox 1010" available from BASF

### Filler

Rubber particles: methacrylate/butadiene/styrene copolymer, average particle size from 0.1 to 1 µm
Nylon particles: trade name "SP-500", average particle size: 5 µm, available from Toray Industries, Inc.
Cellulose particles: trade name "KC Flock W-100", average particle size: 37 µm, available from Nippon Paper Industries Co., Ltd.
Silica particles: average particle size from 50 to 100 µm
MCB: Monarch carbon black, average particle size from 1 to 50 µm, available from Cabot Corporation

From Tables 1 and 2 above, the curable compositions according to embodiments of the present disclosure exhibited excellent heat resistance (Tg: 250°C or higher), and also retained excellent heat resistance (Tg: 250°C or higher) even after exposure to high-temperature environmental conditions. Therefore, it is clear that the curable composition according to the present disclosure is useful in applications requiring heat resistance.

### Example 13 (reference example)

An amount of 115.4 g of the curable composition obtained in Example 9 was dissolved in 180 g of acetone, and a dilution product was obtained.

The resulting dilution product was impregnated into 160 g of a carbon fiber woven fabric (0.8 square meter HexForce 284 3K 2×2 twill, 200 gsm).

Subsequently, the carbon fiber woven fabric impregnated with the diluted product was air dried for 3 days until the residual solvent amount was less than 0.2%, and a prepreg was thereby obtained.

The same operations were performed several times. All of the obtained prepregs were free of tackiness at 25°C (in particular, even when the prepregs were touched with a finger, the curable composition did not adhere to the finger), and excelled in handling ease.

### Comparative Example 3

A prepreg was obtained in the same manner as in Example 13 with the exception that the curable composition obtained in Comparative Example 2 was used.

The obtained prepreg exhibited tackiness at 25°C and was difficult to handle.

### Industrial Applicability

The curable composition of the present disclosure can be suitably used as a material for forming a fiber-reinforced composite material excelling in heat resistance. Additionally, the fiber-reinforced composite material obtained using the curable composition can be suitably used in structural material applications such as in aircraft or automobiles.

## Claims

1. A curable composition comprising a compound (1), a compound (2), and a Lewis acid catalyst,
the compound (1) being represented by Formula (1): 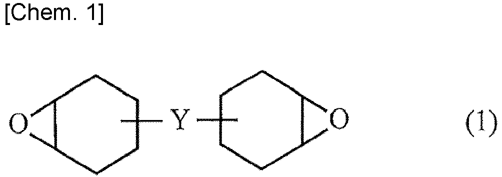
where in Formula (1), Y represents a single bond or a linking group,
the compound (2) being at least one compound selected from compounds represented by Formula (2b), Formula (2c), and Formula (2d): 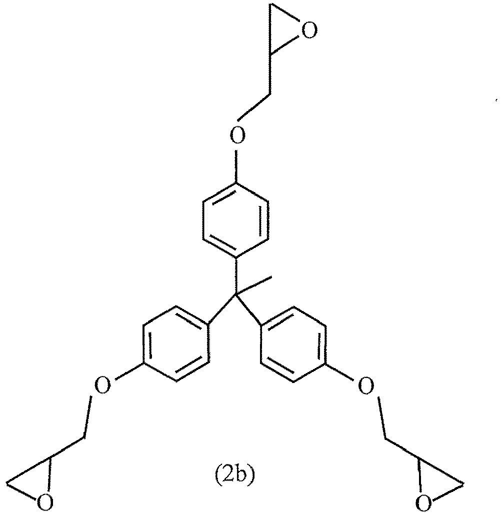 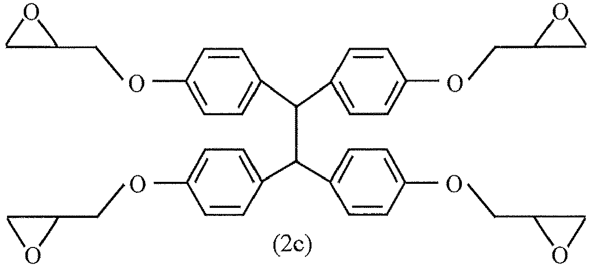 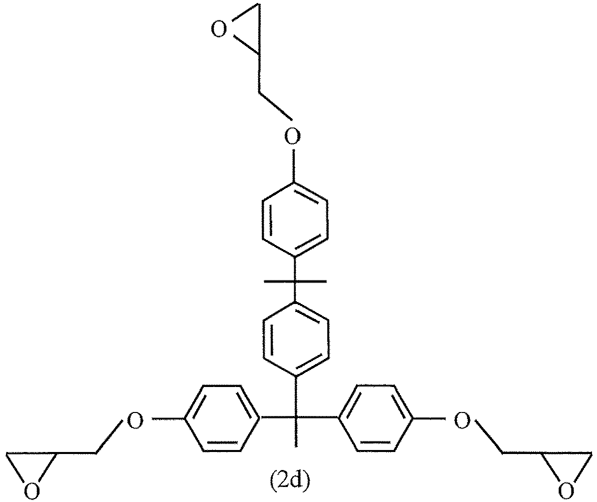
wherein a weight ratio of a content of the compound (1) to a content of the compound (2) is from 10/90 to 40/60.

2. The curable composition according to claim 1, wherein the Lewis acid catalyst is a complex formed by a Lewis acid represented by Formula (3) and a base:
MXₙ (3)
where in Formula (3), M represents a metal atom selected from B, Al, Fe, Sn, Si, Zn, and Ti, X represents a halogen atom, and n indicates an oxidation number of the metal atom.

3. The curable composition according to claim 2, wherein the Lewis acid catalyst is a complex formed by a Lewis acid represented by Formula (3) and an amine.

4. The curable composition according to any one of claims 1 to 3, wherein an E' glass transition temperature, measured as described in the description, of a cured product obtained by curing the curable composition according to dynamic viscoelasticity measurements under Curing Conditions below is 250°C or higher: Curing Conditions: heating at 140°C for 0.5 hours and then heating at 180°C for 2 hours.

5. The curable composition according to any one of claims 1 to 4, further comprising an antioxidant, wherein a content of the antioxidant is from 0.05 to 5.0 parts by weight per a total of 100 parts by weight of the compound (1) and the compound (2).

6. A cured product of the curable composition described in any one of claims 1 to 5.

7. A prepreg comprising reinforcing fibers and the curable composition described in any one of claims 1 to 5.

8. A fiber-reinforced composite material comprising reinforcing fibers and a cured product of the curable composition described in any one of claims 1 to 5.

## Patentansprüche

1. Härtbare Zusammensetzung, umfassend eine Verbindung (1), eine Verbindung (2) und einen Lewis-Säure-Katalysator,
wobei die Verbindung (1) durch die Formel (1) dargestellt ist: 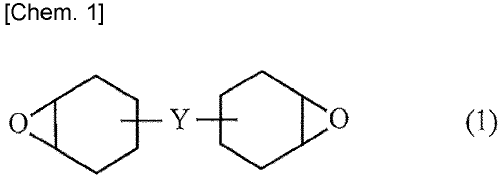
wobei in Formel (1) Y eine Einfachbindung oder eine verbindende Gruppe darstellt,
wobei die Verbindung (2) mindestens eine Verbindung ist, die aus Verbindungen der Formel (2b), der Formel (2c) und der Formel (2d) ausgewählt ist: 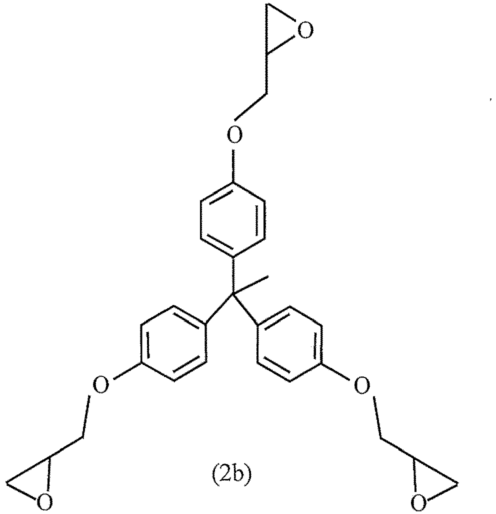 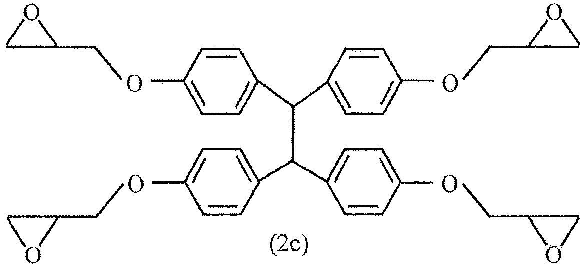 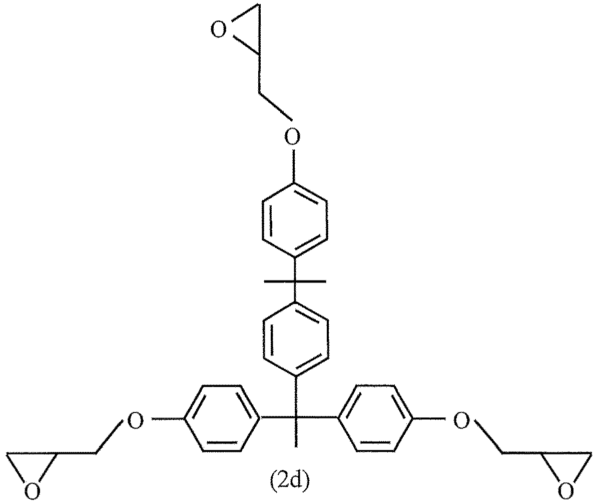
wobei ein Gewichtsverhältnis eines Gehalts der Verbindung (1) zu einem Gehalt der Verbindung (2) 10/90 bis 40/60 beträgt.

2. Die härtbare Zusammensetzung nach Anspruch 1, wobei der Lewis-Säure-Katalysator ein Komplex ist, der durch eine Lewis-Säure der Formel (3) und einer Base gebildet ist:
MXₙ (3)
wobei in der Formel (3) M ein Metallatom, ausgewählt aus B, Al, Fe, Sn, Si, Zn und Ti, darstellt, X ein Halogenatom darstellt und n eine Oxidationszahl des Metallatoms angibt.

3. Die härtbare Zusammensetzung nach Anspruch 2, wobei der Lewis-Säure-Katalysator ein Komplex ist, der durch eine Lewis-Säure der Formel (3) und einem Amin gebildet ist.

4. Die härtbare Zusammensetzung nach irgendeinem der Ansprüche 1 bis 3, wobei die E'-Glasübergangstemperatur, gemessen wie in der Beschreibung beschrieben, eines gehärteten Produkts, das durch Härten der härtbaren Zusammensetzung erhalten wurde, gemäß dynamischen Viskoelastizitätsmessungen unter den nachstehenden Härtungsbedingungen 250 °C oder mehr beträgt:
Aushärtungsbedingungen: Erhitzen auf 140°C für 0,5 Stunden und anschließend Erhitzen auf 180°C für 2 Stunden.

5. Die härtbare Zusammensetzung nach irgendeinem der Ansprüche 1 bis 4, weiter umfassend ein Antioxidationsmittel, wobei der Gehalt des Antioxidationsmittels 0,05 bis 5,0 Gewichtsteile pro insgesamt 100 Gewichtsteile der Verbindung (1) und der Verbindung (2) beträgt.

6. Ausgehärtetes Produkt der härtbaren Zusammensetzung, beschrieben in irgendeinem der Ansprüche 1 bis 5.

7. Prepreg, umfassend Verstärkungsfasern und die härtbare Zusammensetzung, beschrieben in irgendeinem der Ansprüche 1 bis 5.

8. Faserverstärktes Verbundmaterial, umfassend Verstärkungsfasern und ein gehärtetes Produkt der härtbaren Zusammensetzung, beschrieben in irgendeinem der Ansprüche 1 bis 5.

## Revendications

1. Composition durcissable comprenant un composé (1), un composé (2) et un catalyseur acide de Lewis,
le composé (1) étant représenté par la formule (1) : 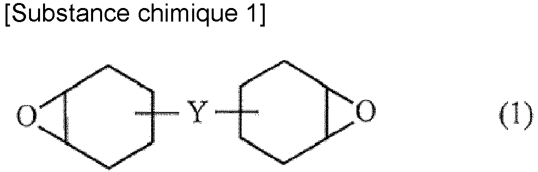
où dans la formule (1), Y représente une liaison simple ou un groupe de liaison,
le composé (2) étant au moins un composé choisi parmi des composés représentés par la formule (2b), la formule (2c) et la formule (2d) : 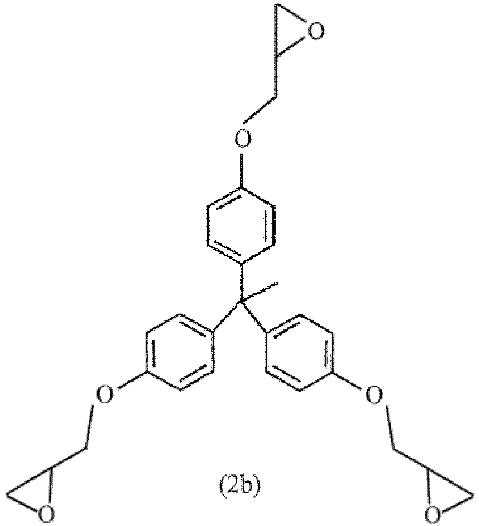 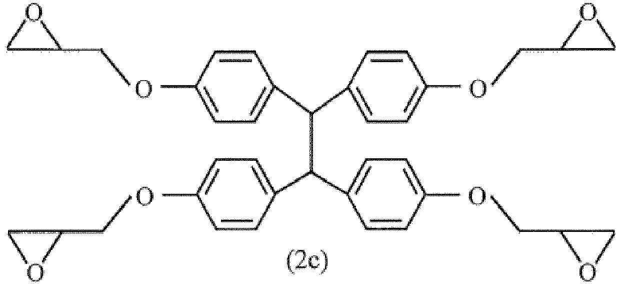 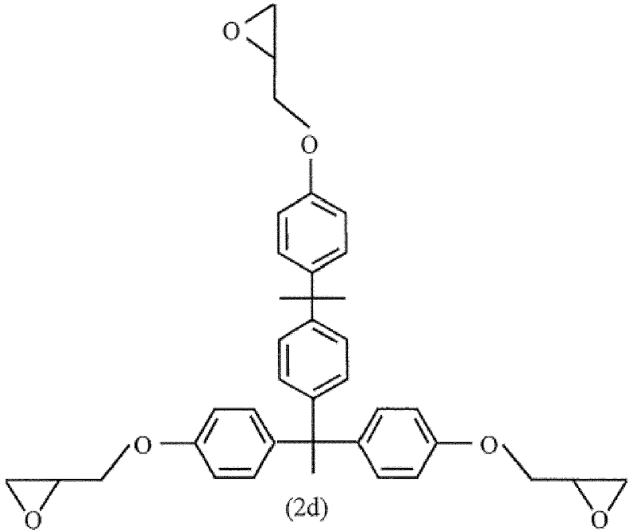
un rapport pondéral d'une teneur du composé (1) à une teneur du composé (2) allant de 10/90 à 40/60.

2. Composition durcissable selon la revendication 1, dans laquelle le catalyseur acide de Lewis est un complexe formé par un acide de Lewis représenté par la formule (3) et une base :
MXₙ (3)
où dans la formule (3), M représente un atome métallique choisi parmi B, Al, Fe, Sn, Si, Zn et Ti, X représente un atome d'halogène et n indique un nombre d'oxydation de l'atome métallique.

3. Composition durcissable selon la revendication 2, dans laquelle le catalyseur acide de Lewis est un complexe formé par un acide de Lewis représenté par la formule (3) et une amine.

4. Composition durcissable selon l'une quelconque des revendications 1 à 3, dans laquelle une température de transition vitreuse E', mesurée ainsi que décrit dans la description, d'un produit durci obtenu par durcissement de la composition durcissable selon des mesures de viscoélasticité dynamique dans les Conditions de durcissement ci-dessous est supérieure ou égale à 250 °C :
Conditions de durcissement : chauffage à 140 °C pendant 0,5 heure puis chauffage à 180 °C pendant 2 heures.

5. Composition durcissable selon l'une quelconque des revendications 1 à 4, comprenant, en outre, un antioxydant, une teneur de l'antioxydant allant de 0,05 à 5,0 parties en poids pour un total de 100 parties en poids du composé (1) et du composé (2).

6. Produit durci de la composition durcissable décrite dans l'une quelconque des revendications 1 à 5.

7. Préimprégné comprenant des fibres de renforcement et la composition durcissable décrite dans l'une quelconque des revendications 1 à 5.

8. Matériau composite renforcé de fibres comprenant des fibres de renforcement et un produit durci de la composition durcissable décrite dans l'une quelconque des revendications 1 à 5.
